# EUROPÄISCHE PATENTSCHRIFT

(11) **EP 3 590 396 B1**
(45) Veröffentlichungstag und Bekanntmachung des Hinweises auf die Patenterteilung: **17.06.2020**
(21) Anmeldenummer: 19176340.8
(22) Anmeldetag: 24.05.2019
(51) Int. Cl.: A47J 31/52

(54) **GETRÄNKEBEREITER UND VERFAHREN ZUR DIAGNOSE EINES GETRÄNKEBEREITERS**
DRINK PREPARATION DEVICE AND METHOD FOR DIAGNOSIS OF A DRINK PREPARATION DEVICE
PRÉPARATEUR DE BOISSONS ET PROCÉDÉ DE DIAGNOSTIC D'UN PRÉPARATEUR DE BOISSONS

(30) Priorität: 02.07.2018 DE 102018210835
(43) Veröffentlichungstag der Anmeldung: 08.01.2020
(73) Patentinhaber: WMF Group GmbH, 73312 Geislingen/Steige (DE)
(72) Erfinder: JOOS, Stephan, 73312 Geislingen (DE); SCHIFFMANN, Andreas, 73312 Geislingen (DE)
(74) Vertreter: Pfenning, Meinig & Partner mbB

(56) Entgegenhaltungen:
- EP-A1- 2 881 018
- EP-A2- 1 302 138
- DE-U1-202009 003 896

## Beschreibung

Es werden ein Getränkebereiter und ein Verfahren zur Diagnose eines Getränkebereiters bereitgestellt. Der Getränkebereiter enthält eine Steuereinheit, die dazu konfiguriert ist, ein Diagnoseprogramm nach einem über die elektronische Datenübertragungsschnittstelle erhaltenen Befehl zu aktivieren und basierend auf einer im Diagnoseprogramm enthaltenen Information für einen bestimmten Zeitraum über den mindestens einen Sensor, optional auch über weitere Sensoren des Getränkebereiters, Messwerte einer oder mehrerer Komponente(n) des Getränkebereiters zu erfassen und diese an der elektronischen Datenübertragungsschnittstelle bereitzustellen und/oder auf dem Datenspeicher abzuspeichern. Der Getränkebereiter und das Verfahren zur Überwachung eines Getränkebereiters erlauben eine effiziente und Ressourcen-schonende Diagnose von Fehlern, die während dem Betrieb auftreten können.

Die Erfindung dient der Überwachung eines Getränkebereiters, um dessen technischen Zustand bei einem Fehlbetrieb treffender und schneller bewerten und beurteilen zu können. Mit dem technischen Zustand bei einem Fehlbetrieb ist nicht nur ein fehlerhafter mechanischer und/oder elektrischer Zustand gemeint, sondern auch ein fehlerhafter Prozessablauf im Getränkebereiter, der die Bereitschaft und Leistung des Getränkebereiters negativ beeinflusst (z.B. die über den Getränkebereiter ausgegebene Getränkequalität und/oder Getränkekonstanz).

Getränkebereiter, wie z.B. Kaffeemaschinen, sind sehr komplexe Vorrichtungen mit vielen mechanischen, hydraulischen, elektrischen und elektronischen Baugruppen und Bauteilen. Über ihre Nutzungszeiten unterliegen sie einem gewissen Verschleiß und einer gewissen Fehleranfälligkeit, was zu Einschränkungen in der Produktqualität oder Nutzung der Getränkebereiters - bis hin zu einem Ausfall des Getränkebereiters - führen kann.

Um dies zu vermeiden, müssen am Getränkebereiter regelmäßig Pflegearbeiten durchgeführt werden. Dies sind beispielsweise tägliche Reinigungen sowie Entkalkungen, deren Häufigkeit von der Wasserhärte und der verarbeiteten Wassermenge abhängt. Zusätzlich sind regelmäßige Wartungsarbeiten und ein Austausch von Verschleißteilen durch einen ausgebildeten Kundendiensttechniker notwendig, um die Betriebsbereitschaft der Getränkebereiter zu gewährleisten.

Es sind Getränkebereiter bekannt, die ihre Betriebsdaten erfassen (z.B. die Anzahl der zubereiteten Produkte, die Anzahl der Reinigungen und/oder die Anzahl der vorgenommenen Entkalkungen), um den Verschleiß des Getränkebereiters und den Zeitpunkt notwendiger Wartungsarbeiten bestimmen zu können. Oft werden von diesen Getränkebereitern Sensorwerte (z.B. eine Temperatur, ein Stromverbrauch, Füllstände von Gefäßen des Getränkebereiters) erfasst und mit Sollwerten verglichen. Treten regelmäßig Abweichungen vom Ist-Wert zum Soll-Wert auf, erfolgen Einträge in einen Speicher des Getränkebereiters, den sog. Fehlerspeicher. Diese Einträge in den Fehlerspeicher des Getränkebereiters dienen dazu, bei einem Ausfall des Getränkebereiters dem Kundendiensttechniker Hinweise zu geben, welches Bauteil oder welche Baugruppe zu reparieren oder zu wechseln ist.

Trotz all dieser Aufwendungen und Vorkehrungen kommt es gelegentlich vor, dass Einzelausfälle von Getränkebereitern auftreten, die nicht auf sich wiederholenden Ereignissen beruhen und damit unbekannt sind. Anders ausgedrückt treten diese Fehler so sporadisch auf, dass sie im Getränkebereiter keinen Eintrag im Fehlerspeicher aufweisen. Folglich findet ein Kundendiensttechniker bei der Wartung des Getränkebereiters keine nützlichen, verwertbaren Einträge im Fehlerspeicher, die auf die aufgetretene Ausfallursache schließen lassen.

In diesem Fall kann bislang nur mit den Hinweisen des Nutzers und der Erfahrung des Technikers aus ähnlichen, bereits aufgetretenen Ausfällen eine Diagnose erfolgen. Der Erfolg der Reparatur hängt also stark vom Erfahrungsschatz des jeweiligen Technikers und auch Nutzers ab, ist mithin mehr oder weniger zufällig. Als Folge dieser Problematik kann nicht ausgeschlossen werden, dass bei einzelnen Getränkebereitern innerhalb kürzester Zeit nach Inbetriebnahme aufgrund eines unbekannten Fehlers mehrere Reparaturen durchgeführt und evtl. Bauteile ausgetauscht werden müssen, bis der Fehler beseitigt wurde und die Getränkebereiter wieder zuverlässig funktionieren.

Die vor Ort erhaltenen Erkenntnisse und Informationen (z.B. Fehlerbeschreibungen, ausgetauschte Bauteile, Zählerstände und/oder Fehlerspeichereinträge) gelangen meist nur in begrenzter Form (z.B. Notizen auf Rechnungen und/oder Kundendienstberichte) zurück zum Hersteller und sind davon abhängig, was die verantwortliche Person für relevant hält. Es werden zudem nur Daten aufgenommen, die tatsächlich bei einem konkreten Wartungstermin von dem zuständigen Techniker erfasst werden. Problematisch ist hierbei zudem, dass bei bestimmten Fehlern die möglichen Ursachen vielfältig sein können und damit die zu erfassende Datenmenge sehr hoch ist.

Die Erlangung von detaillierteren Daten zu einem konkreten Fehler ist jedoch für die Hersteller von Getränkebereitern aus mehreren Gründen wünschenswert. Erstens ermöglichen diese Daten, einen Fehler einer bestimmten Ursache (z.B. ein Komponentenverschleiß) zuzuordnen. Kurz gesagt würde der detaillierte Bezug von einem Fehler zu seiner Ursache erlauben, Schwachstellen des Getränkebereites festzustellen (z.B. bestimmten Komponenten hiervon) und basierend auf diesen Informationen Wartungsintervalle festzulegen oder bestehende Wartungsintervalle anzupassen. Zweitens wäre eine Vorhersage bei bislang fehlerlos betriebenen Getränkebereitern möglich, wann wahrscheinlich mit einem Fehler gerechnet werden kann und ob oder wann eine Wartung sinnvoll erscheint. Darüberhinaus wäre basierend auf dem erlangten Wissen eine Verbesserung von einzelnen Komponenten und Prozessen des Getränkebereiters möglich, was auch für die Neuentwicklung von Getränkebereitern vorteilhaft ist.

Zusammenfassend wird festgehaltem, dass die bisher bekannten Getränkebereiter keine systematische Fehlererkennung aufweisen. Die Folge ist, dass ihr Reparaturerfolg von subjektiven Faktoren wie dem zuständigen Techniker bzw. dem Betreiber des Getränkebereiters abhängig ist. Es kann somit nicht ausgeschlossen werden, dass in manchen Fällen Komponenten des Getränkebereiters auf Verdacht ausgetauscht werden, d.h. es erfolgt ein Austausch mindestens einer Komponente des Getränkebereiters, der für die Fehlerbehebung nicht notwendig gewesen wäre. Aufgrund der damit zwangsweise höheren Reparaturkosten kann die Kundenzufriedenheit sinken und ein Imageverlust des Herstellers die Folge sein.

Ausgehend hiervon war es die Aufgabe der vorliegenden Erfindung einen Getränkebereiter, der eine effiziente, fehlerfreie und Ressourcen-schonende (z.B. Energie-schonende) Diagnose von Fehlern erlaubt und ein Verfahren zu einer solchen Diagnose eines Getränkebereiters vorzuschlagen.

Die Aufgabe wird gelöst durch den Getränkebereiter mit den Merkmalen von Anspruch 1 und das Verfahren mit den Merkmalen von Anspruch 8.

Erfindungsgemäß wird ein Getränkebereiter bereitgestellt, enthaltend
a) mindestens einen Sensor zur Erfassung von Messwerten zu mindestens einer Komponente des Getränkebereiters, optional weitere Sensor zur Erfassung von Messwerten zu mindestens einer Komponente des Getränkebereiters;
b) einen Datenspeicher;
c) eine Steuereinheit;
d) eine elektronische Datenübertragungsschnittstelle, die zur drahtgebundenen und/oder drahtlosen Datenübertragung geeignet ist;
e) ein Diagnoseprogramm, das dem Getränkebereiter über die elektronische Datenübertragungsschnittstelle zur Verfügung steht und/oder auf dem Datenspeicher gespeichert ist,
dadurch gekennzeichnet, dass die Steuereinheit dazu konfiguriert ist, das Diagnoseprogramm nach einem über die elektronische Datenübertragungsschnittstelle erhaltenen Befehl zu aktivieren und basierend auf einer im Diagnoseprogramm enthaltenen Information für einen bestimmten Zeitraum über den mindestens einen Sensor, optional auch über weitere Sensoren des Getränkebereiters, Messwerte einer oder mehrerer Komponente(n) des Getränkebereiters zu erfassen und diese an der elektronischen Datenübertragungsschnittstelle bereitzustellen und/oder auf dem Datenspeicher abzuspeichern.

Der Begriff Messwerte umfasst erfindungsgemäß insbesondere physikalische und chemische Messgrößen (wie z.B. Temperatur, Stromstärke und pH-Wert) und Parameter (wie z.B. Zeit, Zyklen, Mengen und Regelparameter).

Der erfindungsgemäße Getränkebereiter ermöglicht eine effiziente und genaue Überwachung von einzelnen Komponenten des Getränkebereiters, da die Überwachung nicht permanent erfolgt, sondern nur für einen bestimmten Zeitraum und erst nach einem über die elektronische Datenübertragungsschnittstelle erhaltenen Befehl (d.h. das Diagnoseprogramm muss vor der Erfassung von Messwerten erst aktiviert werden).,
Der Beginn der Erfassung als auch der Bereitstellung und/oder Speicherung von Messwerten (d.h. der Beginn des bestimmten Zeitraums) kann unmittelbar nach der Aktivierung des Diagnoseprogramms und/oder erst nach einem bestimmten Auslöser ("trigger") und/oder einem bestimmten Ereignis ("event") starten. In letzterem Fall erfolgt beispielsweise die Erfassung der Messwerte eines Brühstroms erst, nachdem eine Brühung ausgelöst wird. Das Ende der Erfassung als auch der Bereitstellung und/oder Speicherung von Messwerten (d.h. das Ende des bestimmten Zeitraums) kann durch eine Deaktivierung des Diagnoseprogramms (z.B. über einen Befehl über die elektronische Datenübertragungsschnittstelle) und/oder nach einem bestimmten Auslöser ("trigger") und/oder einem bestimmten Ereignis ("event") bewirkt werden. In letzterem Fall wird beispielsweise die Erfassung der Messwerte eines Brühstroms nach dem Ende der Brühung beendet, obwohl das Diagnoseprogramm evtl. noch eine bestimmte Zeit lang weiter aktiv ist. Der Auslöser und/oder das Ereignis können eine im Diagnoseprogramm enthaltene (d.h. gespeicherte) Information darstellen. Diese Information kann von der Steuereinheit abgerufen werden, um die Erfassung als auch die Bereitstellung und/oder Speicherung von Messwerten zu starten und/oder zu beenden.

In einer bevorzugten Ausgestaltungsform wird das Diagnoseprogramm auch durch Anschalten des Getränkebereiters aktiviert (d.h. auch ohne einen Aktivierungsbefehl über die elektronische Datenübertragungsschnittstelle). In diesem Fall ist das Diagnoseprogramm bereits nach dem Anschalten des Getränkebereiters für einen bestimmten, nicht permanenten, Zeitraum aktiviert.

Ferner ist an dem Getränkebereiter vorteilhaft, dass die Messwerte über den mindestens einen Sensor (optional mehrere Sensoren) basierend auf, d.h. in Abhängigkeit von, einer im Diagnoseprogramm enthaltenen Information erfasst werden. Diese Information kann aus einer bestimmten Auswahl von Messwerten in Bezug auf den mindestens einen Sensor bestehen, d.h. es kann sich bei dieser Information um eine Tabelle handeln, in der (reversibel) festgelegt ist, welche Messwerte des mindestens einen Sensors nach der Aktivierung des Diagnoseprogramms durch den Befehl erfasst werden sollen.

Mit anderen Worten legt die im Diagnoseprogramm gespeicherte Information (auf konfigurierbare Weise) fest, welche Messwerte über den mindestens einen Sensor (optional mehrere Sensoren) für den bestimmten Zeitraum erfasst werden. Dies bewirkt, dass nur solche Messwerte erfasst werden und an der elektronischen Datenübertragungsschnittstelle bereitgestellt werden und/oder auf dem Datenspeicher abgespeichert werden, die in einem konkreten Kontext für relevant erachtet werden. Folglich kann die Diagnose des Getränkebereiters sehr effizient gestaltet werden und Ressourcen wie Arbeitszeit und elektrische Energie eingespart werden.

Der Getränkebereiter kann dadurch gekennzeichnet sein, dass das Diagnoseprogramm dazu programmiert ist, die über den bestimmten Zeitraum erfassten und auf dem Datenträger abgespeicherten Messwerte mathematisch auszuwerten, sodass die Daten zu den ausgewerteten Messwerten eine gegenüber den abgespeicherten Messwerten reduzierte Datenmenge aufweisen, wobei die Daten zu den ausgewerteten Messwerte bevorzugt ausgewählt sind aus der Gruppe bestehend aus Minimalmesswert, Maximalmesswert, (zeitlicher) Mittelwert der Messwerte, Steigung zwischen mindestens zwei Messwerten, Steigung einer linearen Regressionsgeraden der Messwerte, Integral einer von den Messwerten definierten Messkurve, Integral eines Intervalls einer von den Messwerten definierten Messkurve, und Kombinationen hiervon. Die Daten zu den ausgewerteten Messwerten können per Befehl über die elektronische Datenübertragungsschnittstelle festgelegt werden, d.h. es kann beispielsweise definiert werden, dass aus den erfassten Messwerten ein Minimalmesswert, ein Maximalmesswert und ein Mittelwert gebildet wird (siehe z.B. Tabelle 2 in Beispiel 4). Die Festlegung erfolgt hierbei über Aktivierung und/oder Deaktivierung der jeweiligen Auswertung (Minimalmesswert, Maximalmesswert und/oder Mittelwert) innerhalb (einer Tabelle) des Diagnoseprogramms für die Messwerte des mindestens einen Sensors (z.B. Messwerte zum Brüherstrom, Messwerte zur Brühtemperatur, Messwerte zur Getränketemperatur und/oder Messwerte zur Kesseltemperatur).

In einer bevorzugten Ausgestaltungsform bestimmt die im Diagnoseprogramm enthaltene Information, welche Messwerte einer oder mehrerer Komponente(n) des Getränkebereiters über den mindestens einen Sensor, optional auch über weitere Sensoren des Getränkebereites, erfasst werden, wobei die im Diagnoseprogramm enthaltene Information insbesondere durch einen Befehl geändert werden kann, der über die elektronische Datenübertragungsschnittstelle erhalten wird. Beispielsweise kann die im Diagnoseprogramm enthaltene Information bestimmen, dass bei der Diagnose für einen bestimmten Zeitraum die Anzahl der Brühungen (Brühzyklen) und der Brüherstrom erfasst wird, wobei die Erfassung des Brühstroms erst erfolgt, wenn eine Brühung ausgelöst wird und bevorzugt nach der Brühung die Erfassung des Brühstroms wieder beendet wird. Die im Diagnoseprogramm enthaltene Information kann somit auch festlegen, dass die Erfassung eines Messwerts in Abhängigkeit von einem anderen erfassten Messwert erfolgt.

Die Steuereinheit kann dazu konfiguriert sein, an der elektronischen Datenübertragungsschnittstelle Daten zu Messwerten bereitzustellen, die von dem Diagnoseprogramm ausgewertet wurden, und bevorzugt die Daten über die elektronische Datenübertragungsschnittstelle an einen Empfänger zu senden, besonders bevorzugt an die Quelle des Befehls, wobei die Daten zu den ausgewerteten Messwerten optional nach dem Senden an den Empfänger auf dem Getränkebereiter gelöscht werden.

Ferner kann die Steuereinheit dazu konfiguriert sein, nach einem über die elektronische Datenübertragungsschnittstelle erhaltenen Befehl, mindestens einen auf dem Datenspeicher abgespeicherten Soll-Messwert des mindestens einen Sensors an der elektronischen Datenübertragungsschnittstelle bereitzustellen und bevorzugt über die elektronische Datenübertragungsschnittstelle an einen Empfänger zu senden, besonders bevorzugt an die Quelle des Befehls, wobei der mindestens eine Soll-Messwert insbesondere ausgewählt ist aus der Gruppe bestehend aus Soll-Minimalmesswert, Soll-Maximalmesswert, (zeitlicher) Soll-Mittelwert, Soll-Steigung zwischen mindestens zwei Messwerten, Soll-Steigung einer linearen Regressionsgeraden, Soll-Integral einer von Messwerten definierten Messkurve, Soll-Integral eines Intervalls einer von den Messwerten definierten Messkurve, und Kombinationen hiervon.

In einer bevorzugten Ausführungsform ist das Diagnoseprogramm konfigurierbar, bevorzugt über die elektronische Datenübertragungsschnittstelle, wobei das Diagnoseprogramm besonders bevorzugt dazu konfiguriert ist, für einen bestimmten (nicht permanenten) Zeitraum, bevorzugt basierend auf einem Auslöser und/oder Ereignis, über mindestens einen weiteren Sensor, optional mehrere weitere Sensoren, Messwerte der Komponente, optional mindestens einer weiteren oder mehrerer weiterer Komponenten, des Getränkebereiters zu erfassen und diese an der elektronischen Datenübertragungsschnittstelle bereitzustellen und/oder auf dem Datenspeicher zu speichern.

Der Getränkebereiter kann dadurch gekennzeichnet sein, dass die mindestens eine Komponente ausgewählt ist aus der Gruppe bestehend aus elektrischer Motor, elektrisches Heizelement, Kühlelement, bewegliche Baugruppe, Flüssigkeitsbehälter, Feststoffbehälter und Kombinationen hiervon.

Der mindestens einen Sensor des Getränkebereiters kann dazu geeignet sein, einen Messwert zu erfassen, der ausgewählt ist aus der Gruppe bestehend aus
i) Stromstärke, Spannungshöhe, Stromdauer, Spannungsdauer und Kombinationen hiervon, wobei die Komponente bevorzugt ein elektrischer Motor und/oder ein elektrisches Heizelement ist, besonders bevorzugt ein elektrischer Motor ausgewählt aus der Gruppe bestehend aus Motor zum Mahlen von Kaffee und Motor zum Transport von Brühwasser, und/oder ein elektrisches Heizelement ausgewählt aus der Gruppe bestehend aus Heisswasserboilerheizung und Dampfkesselheizung; und/oder
ii) Position einer Baugruppe, Bewegungsgeschwindigkeit einer Baugruppe und Kombinationen hiervon, wobei die Komponente bevorzugt eine bewegliche Baugruppe ist, besonders bevorzugt eine bewegliche Baugruppe ausgewählt aus der Gruppe bestehend aus Ventil, Brühgruppe und Mühle; und/oder
iii) Flüssigkeitsfüllmenge, Flüssigkeitstemperatur, Flüssigkeitsart und Kombinationen hiervon, wobei die Komponente bevorzugt ein Flüssigkeitsbehälter ist, bevorzugt ein Flüssigkeitsbehälter ausgewählt aus der Gruppe bestehend aus Wassertank, Milchtank und Siruptank; und/oder
iv) Feststofffüllmenge, Feststoffart und Kombinationen hiervon, wobei die Komponente bevorzugt ein Feststoffbehälter ist, bevorzugt ein Feststoffbehälter ausgewählt aus der Gruppe bestehend aus Bohnenbehälter, Kaffeemehlbehälter und Zuckerbehälter; und/oder
i) Gasfüllmenge, Gastemperatur, Gasart und Kombinationen hiervon, wobei die Komponente bevorzugt ein Gasbehälter ist, besonders bevorzugt ein Dampfkessel; und/oder
v) Temperatur, bevorzugt Temperatur einer Flüssigkeit, eines Feststoffs und/oder eines Gases; und/oder
vi) Druck, bevorzugt Druck eines Gases und/oder einer Flüssigkeit.
Optional gilt dies auch für weitere Sensoren des Getränkebereiters.

Der mindestens eine Sensor kann dazu geeignet sein, physikalische und/oder chemische Messgrößen zu erfassen, wobei der mindestens eine Sensor bevorzugt ausgewählt ist aus der Gruppe bestehend aus mechanischen Sensoren, thermoelektrischen Sensoren, resistiven Sensoren, piezoelektrischen Sensoren, kapazitiven Sensoren, induktiven Sensoren, optischen Sensoren, magnetischen Sensoren und Kombinationen hiervon, besonders bevorzugt ausgewählt aus der Gruppe bestehend aus Magnetfeldsensor, DFM-Impulssensor, IR-Sensor, PWM-Taktsensor, PWM-Pulssensor und Kombinationen hiervon. Optional gilt dies auch für weitere Sensoren des Getränkebereiters.

In einer bevorzugten Ausführungsform ist die elektronische Datenübertragungsschnittstelle drahtgebunden (bevorzugt über LAN und/oder Ethernet) und/oder drahtlos (bevorzugt über WLAN, Bluetooth und/oder Mobilfunk) mit einem Serverspeicher und/oder einem Cloud-Speicher verbunden.

Ferner wird erfindungsgemäß ein Verfahren zur Diagnose eine Getränkebereiters bereitgestellt, umfassend die Schritte
a) Warten auf einen Befehl zur Diagnose über eine elektronische Datenübertragungsschnittstelle des Getränkebereiters, wobei die elektronische Datenübertragungsschnittstelle zur drahtgebundenen und/oder drahtlosen Datenübertragung geeignet ist;
b) Aktivieren eines Diagnoseprogramms durch eine Steuereinheit des Getränkebereiters nach einem über die elektronische Datenübertragungsschnittestelle erhaltenen Befehl, wobei das Diagnoseprogramm dem Getränkebereiter über die elektronische Datenübertragungsschnittstelle zur Verfügung steht und/oder auf dem Datenspeicher gespeichert ist; und
c) Erfassen von Messwerten einer oder mehrerer Komponente(n) des Getränkebereiters über den mindestens einem Sensor, optional auch über weitere Sensoren des Getränkebereiters, für einen bestimmten Zeitraum basierend auf einer im Diagnoseprogramm abgespeicherten oder vorgenommenen Auswahl, wobei die Messwerte an der elektronischen Datenübertragungsschnittstelle bereitgestellt werden und/oder auf einem Datenspeicher des Getränkebereiters abgespeichert werden.

Der Beginn der Erfassung als auch der Bereitstellung und/oder Speicherung von Messwerten (d.h. der Beginn des bestimmten Zeitraums) kann unmittelbar nach der Aktivierung des Diagnoseprogramms und/oder erst nach einem bestimmten Auslöser ("trigger") und/oder einem bestimmten Ereignis ("event") starten. Das Ende der Erfassung als auch der Bereitstellung und/oder Speicherung von Messwerten (d.h. das Ende des bestimmten Zeitraums) kann durch eine Deaktivierung des Diagnoseprogramms (z.B. über einen Befehl über die elektronische Datenübertragungsschnittstelle) und/oder nach einem bestimmten Auslöser ("trigger") und/oder einem bestimmten Ereignis ("event") bewirkt werden. Der Auslöser und/oder das Ereignis können eine im Diagnoseprogramm enthaltene (d.h. gespeicherte) Information darstellen. Diese Information kann von der Steuereinheit abgerufen werden, um die Erfassung als auch die Bereitstellung und/oder Speicherung von Messwerten zu starten und/oder zu beenden.

In einer bevorzugten Ausgestaltungsform umfasst das Verfahren, dass das Diagnoseprogramm auch durch Anschalten des Getränkebereiters aktiviert wird (d.h. auch ohne einen Aktivierungsbefehl über die elektronische Datenübertragungsschnittstelle). In diesem Fall ist das Diagnoseprogramm bereits nach dem Anschalten des Getränkebereiters für einen bestimmten, nicht permanenten, Zeitraum aktiviert.

Das Verfahren kann dadurch gekennzeichnet sein, dass das Diagnoseprogramm die über den bestimmten Zeitraum erfassten und auf dem Datenträger abgespeicherten Messwerte mathematisch auswertet, sodass die Daten zu den ausgewerteten Messwerte eine gegenüber den abgespeicherten Messwerten reduzierte Datenmenge aufweisen. Bevorzugt sind die Daten zu den ausgewerteten Messwerte ausgewählt sind aus der Gruppe bestehend aus Minimalmesswert, Maximalmesswert, (zeitlicher) Mittelwert der Messwerte, Steigung zwischen mindestens zwei Messwerten, Steigung einer linearen Regressionsgeraden der Messwerte, Integral einer von den Messwerten definierten Messkurve, Integral eines Intervalls einer von den Messwerten definierten Messkurve, und Kombinationen hiervon. Die Daten zu den ausgewerteten Messwerten können per Befehl über die elektronische Datenübertragungsschnittstelle festgelegt werden, d.h. es kann beispielsweise definiert werden, dass aus den erfassten Messwerten ein Minimalmesswert, ein Maximalmesswert und ein Mittelwert gebildet wird (siehe z.B. Tabelle 2 in Beispiel 4). Die Festlegung erfolgt hierbei über Aktivierung und/oder Deaktivierung der jeweiligen Auswertung (Minimalmesswert, Maximalmesswert und/oder Mittelwert) innerhalb (einer Tabelle) des Diagnoseprogramms für die Messwerte des mindestens einen Sensors (z.B. Messwerte zum Brüherstrom, Messwerte zur Brühtemperatur, Messwerte zur Getränketemperatur und/oder Messwerte zur Kesseltemperatur).

In einer bevorzugten Ausgestaltungsform bestimmt die im Diagnoseprogramm enthaltene Information, welche Messwerte einer oder mehrerer Komponente(n) des Getränkebereiters über den mindestens einen Sensor, optional auch über weitere Sensoren des Getränkebereites, erfasst werden, wobei die im Diagnoseprogramm enthaltene Information insbesondere durch einen Befehl geändert werden kann (optional während des Verfahrens geändert wird), der über die elektronische Datenübertragungsschnittstelle erhalten wird. Die im Diagnoseprogramm enthaltene Information kann auch festlegen, dass die Erfassung eines Messwerts in Abhängigkeit von einem anderen erfassten Messwert erfolgt.

In einer bevorzugten Ausführungsform stellt die Steuereinheit an der elektronischen Datenübertragungsschnittstelle Daten zu Messwerten bereit, die von dem Diagnoseprogramm ausgewertet wurden. Bevorzugt sendet die Steuereinheit die Daten über die elektronische Datenübertragungsschnittstelle an einen Empfänger, besonders bevorzugt an die Quelle des Befehls, wobei die Daten zu den ausgewerteten Messwerten optional nach dem Senden an den Empfänger auf dem Getränkebereiter gelöscht werden.

In einer weiteren bevorzugten Ausführungsform stellt die Steuereinheit, nach einem über die elektronische Datenübertragungsschnittstelle erhaltenen Befehl, mindestens einen auf dem Datenspeicher abgespeicherten Soll-Messwert des mindestens einen Sensors an der elektronischen Datenübertragungsschnittstelle bereit. Bevorzugt sendet die Steuereinheit den Soll-Wert über die elektronische Datenübertragungsschnittstelle an einen Empfänger, besonders bevorzugt an die Quelle des Befehls, wobei der mindestens eine Soll-Messwert insbesondere ausgewählt ist aus der Gruppe bestehend aus Soll-Minimalmesswert, Soll-Maximalmesswert, (zeitlicher) Soll-Mittelwert, Soll-Steigung zwischen mindestens zwei Messwerten, Soll-Steigung einer linearen Regressionsgeraden, Soll-Integral einer von Messwerten definierten Messkurve, Soll-Integral eines Intervalls einer von den Messwerten definierten Messkurve, und Kombinationen hiervon.

Das Diagnoseprogramm kann konfigurierbar sein, bevorzugt über die elektronische Datenübertragungsschnittstelle, wobei das Diagnoseprogramm besonders bevorzugt dazu konfiguriert ist oder wird, für einen bestimmten Zeitraum, bevorzugt basierend auf einem Auslöser und/oder Ereignis, über mindestens einen weiteren Sensor, optional mehrere weitere Sensoren, Messwerte der Komponente, optional mindestens einer weiteren oder mehrerer weiterer Komponenten, des Getränkebereiters zu erfassen und diese an der elektronischen Datenübertragungsschnittstelle bereitzustellen und/oder auf dem Datenspeicher zu speichern.

Die mindestens eine Komponente kann ausgewählt sein aus der Gruppe bestehend aus elektrischer Motor, elektrisches Heizelement, Kühlelement, bewegliche Baugruppe, Flüssigkeitsbehälter, Feststoffbehälter und Kombinationen hiervon.

Der mindestens einen Sensor kann dazu geeignet sein, einen Messwert zu erfassen, der ausgewählt ist aus der Gruppe bestehend aus
ii) Stromstärke, Spannungshöhe, Stromdauer, Spannungsdauer und Kombinationen hiervon, wobei die Komponente bevorzugt ein elektrischer Motor und/oder ein elektrisches Heizelement ist, besonders bevorzugt ein elektrischer Motor ausgewählt aus der Gruppe bestehend aus Motor zum Mahlen von Kaffee und Motor zum Transport von Brühwasser, und/oder ein elektrisches Heizelement ausgewählt aus der Gruppe bestehend aus Heisswasserboilerheizung und Dampfkesselheizung; und/oder
iii) Position einer Baugruppe, Bewegungsgeschwindigkeit einer Baugruppe und Kombinationen hiervon, wobei die Komponente bevorzugt eine bewegliche Baugruppe ist, besonders bevorzugt eine bewegliche Baugruppe ausgewählt aus der Gruppe bestehend aus Ventil, Brühgruppe und Mühle; und/oder
iv) Flüssigkeitsfüllmenge, Flüssigkeitstemperatur, Flüssigkeitsart und Kombinationen hiervon, wobei die Komponente bevorzugt ein Flüssigkeitsbehälter ist, bevorzugt ein Flüssigkeitsbehälter ausgewählt aus der Gruppe bestehend aus Wassertank, Milchtank und Siruptank; und/oder
v) Feststofffüllmenge, Feststoffart und Kombinationen hiervon, wobei die Komponente bevorzugt ein Feststoffbehälter ist, bevorzugt ein Feststoffbehälter ausgewählt aus der Gruppe bestehend aus Bohnenbehälter, Kaffeemehlbehälter und Zuckerbehälter; und/oder
vi) Gasfüllmenge, Gastemperatur, Gasart und Kombinationen hiervon, wobei die Komponente bevorzugt ein Gasbehälter ist, bevorzugt ein Dampfkessel; und/oder
vii) Temperatur, bevorzugt Temperatur einer Flüssigkeit, eines Feststoffs und/oder eines Gases; und/oder
vii) Druck, bevorzugt Druck eines Gases und/oder einer Flüssigkeit.
Optional gilt dies auch für weitere Sensoren des Getränkebereiters.

Der mindestens eine Sensor kann dazu geeignet sein, physikalische und/oder chemische Messgrößen zu erfassen, wobei der mindestens eine Sensor bevorzugt ausgewählt ist aus der Gruppe bestehend aus mechanischen Sensoren, thermoelektrischen Sensoren, resistiven Sensoren, piezoelektrischen Sensoren, kapazitiven Sensoren, induktiven Sensoren, optischen Sensoren, magnetischen Sensoren und Kombinationen hiervon, besonders bevorzugt ausgewählt aus der Gruppe bestehend aus Magnetfeldsensor, DFM-Impulssensor, IR-Sensor, PWM-Taktsensor, PWM-Pulssensor und Kombinationen hiervon. Optional gilt dies auch für weitere Sensoren des Getränkebereiters.

In einer bevorzugten Ausführungsform ist die elektronische Datenübertragungsschnittstelle drahtgebunden, bevorzugt über LAN und/oder Ethernet, und/oder drahtlos, bevorzugt über WLAN, Bluetooth und/oder Mobilfunk, mit einem Serverspeicher und/oder einem Cloud-Speicher verbunden oder wird damit verbunden.

Anhand der nachfolgenden Figuren und Beispiele soll der erfindungsgemäße Gegenstand näher erläutert werden, ohne diesen auf die hier dargestellten, spezifischen Ausführungsformen einschränken zu wollen.

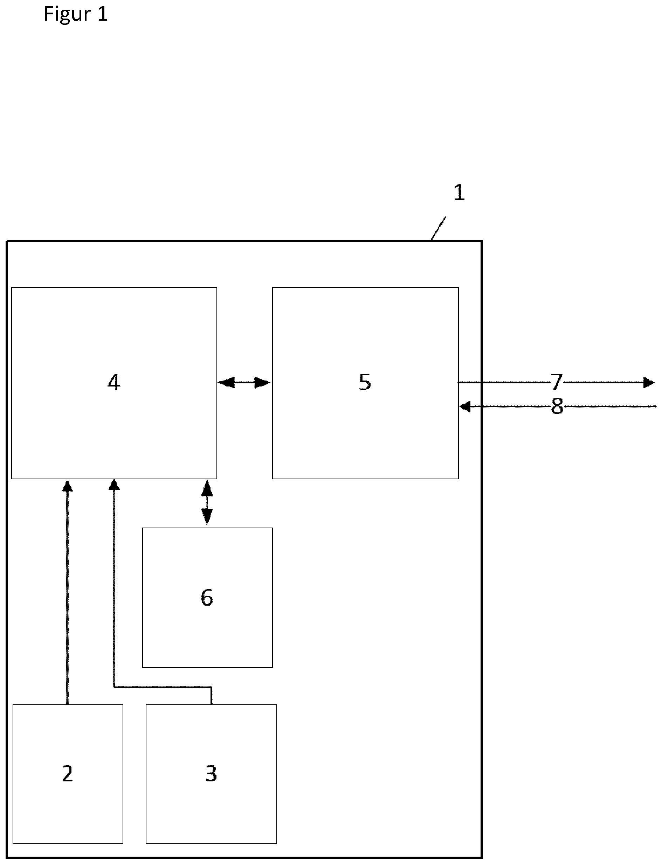

Figur 1 zeigt die Übermittlungswege von Signalen (Daten) in einem erfindungsgemäßen Getränkebereiter.
Figur 2 zeigt ein Beispiel für erhaltene Messwerte nach einer Aktivierung der Erfassung von Messwerten durch einen über die elektronische Datenübertragungsschnittstelle erhaltenen Befehl zur Aktivierung des Diagnoseprogramms.

### Beispiel 1 - Datenerfassung eines erfindungsgemäßen Getränkebereiters

Die Datenerfassung eines erfindungsgemäßen Getränkebereiters kann folgende Einstellungen aufweisen:
- Alle Messwerte eines Sensors oder mehreren Sensoren werden erfasst;
- Minimalmesswert eines Sensors oder mehreren Sensoren wird erfasst;
- Maximalmesswert eines Sensors oder mehreren Sensoren wird erfasst;
- Mittelwert eines Messwerts oder mehrerer Messwerte aller Sensoren wird erfasst;
- zeitlicher Mittelwert eines Messwerts oder mehrerer Messwerte aller Sensoren wird erfasst
- eine Steigung eines Messwerts oder mehrere Messwerte aller Sensoren wird erfasst
- eine Steigung der linearen Regressionsgerade eines Messwerts oder mehrerer Messwerte aller Sensoren wird erfasst;
- ein Integral eines Messwerts oder mehrerer Messwerte aller Sensoren wird erfasst;
- alle Messwerte eines Sensors oder mehreren Sensoren werden in einem Intervall erfasst (Hierdurch werden die Daten in Intervalle eingeteilt, alle bisher genannten Auswertungen werden dann pro Intervall durchgeführt);
- alle Messwerte eines Sensors oder mehreren Sensoren werden in einem Raster erfasst, d.h. es wird ein Raster festgelegt und es werden nur Änderungen bei Überschreitung des Rasters übermittelt)

Die Aufzählung ist nicht einschränkend. Die oben genannten Einstellungen (Konfigurationen) sind für jeden Sensor, jeden Aktor und jeden Parameter einzeln in dem Diagnoseprogramm konfigurierbar, speziell über Änderung von Werten in einer oder mehrerer Tabelle(n), die im Diagnoseprogramm gespeichert sind und Informationen über die Datenerfassung jedes Sensors, jedes Aktors und jedes Parameters enthalten.

### Beispiel 2 - Fehlerdiagnose

Beispielsweise beschwert sich ein Betreiber des Getränkebereiters (z.B. ein Kunde des Herstellers) über stark schwankenden Getränkemengen.

Die im Diagnoseprogramm enthaltene Information wird durch einen Befehl über die elektronische Datenübertragungsschnittstelle so geändert, dass als Messwerte die Zustände der Ventile, der Wasserpumpe und des DFM nach einem Aktivierungsbefehl über die elektronische Datenübertragungsschnittstelle erfasst werden.

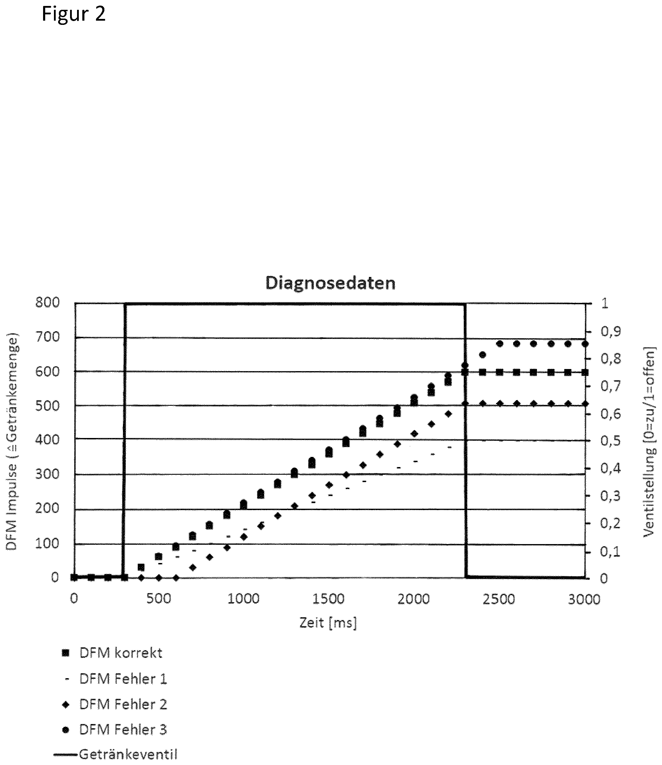

Die Auswertung der Daten ergibt das im Allgemeinen einen Verlauf wie in Figur 2 "DFM korrekt" erfasst wird. In Einzelfällen sind Verläufe wie in Figur 2 "DFM Fehler 1", "DFM Fehler 2" oder "DFM Fehler 3" zu erkennen. Aus den Verläufen kann auf folgenden Fehler geschlossen werden:
DFM Fehler 1: Ventil öffnet nicht vollständig, dadurch Fluss zu gering.
DFM Fehler 2: Ventil öffnet zu spät (Ventil klemmt), dadurch Fluss zu kurz. Beide Fehlerfälle führen zu Getränkemengen, die zu gering sind.
DFM Fehler 3: Ventil schließt zu spät (Ventil klemmt), dadurch Fluss zu lang. Der Fehler führt zu Getränkemengen, die zu hoch sind.

Fehler kann erkannt und lokalisiert und der Austausch des Getränkeventils kann durch den Service veranlasst werden.

### Beispiel 3 -Diagnose-Konfiguration auf dem Datenspeicher

Die Tabelle 1 zeigt eine auf dem Datenspeicher des Getränkebereiters gespeicherte Diagnose-Konfiguration, das heißt eine Information in Form einer Tabelle, welche Messwerte (hier aufgeführt in Spalte: "Datenbank Parameter") des mindestens einen Sensors (oder mehrerer Sensoren) des Getränkebereiters nach dem Erhalt eines Aktivierungsbefehls über die elektronische Datenübertragungsschnittstelle erfasst werden sollen.

**Tabelle 1**

| **Datenbank Parameter** | **StartTrigger** | **EndTrigger** | **Logging aktiv** |
|---|---|---|---|
| Brühzeit | **Getränkestart** | **Getränkeende** | **ja** |
| Brühzyklen | **Getränkestart** | **Getränkeende** | **ja** |
| Mehlmenge | **Getränkestart** | **Getränkeende** | **nein** |
| Regelparameter | **täglich** | - | **ja** |

Für die Messwerte bestimmter Komponenten des Getränkebereiters (z.B. die Brühzeit, die Brühzyklen, die Mehlmenge und die Regelparameter) ist der einprogrammierte Start der Aufzeichnung ("StartTrigger") und das einprogrammierte Ende der Aufzeichnung ("EndTrigger") angegeben. Ferner ist angegeben, ob die Aufzeichnung des jeweiligen Parameters gerade aktiviert ist ("Loggingaktiv").

### Beispiel 4 - Weitere Diagnose-Konfiguration auf dem Datenspeicher

Die Tabelle 2 zeigt eine weitere Diagnose-Konfiguration, d.h. eine Information in Form einer Tabelle, welche Messwerte (hier aufgeführt in Spalte: "Sensor & Aktor") des mindestens einen Sensors (oder mehrerer Sensoren) des Getränkebereiters nach dem Erhalt eines Aktivierungsbefehls über die elektronische Datenübertragungsschnittstelle erfasst werden sollen.

**Tabelle 2**

| | | **Auswertungen** | | | | | |
|---|---|---|---|---|---|---|---|
| **Sensor & Aktor** | **Alle Werte** | **Min** | **Max** | **Mittelwert** | **StartTrigger** | **EndTrigger** | **Logging aktiv** |
| Brüherstrom | **nein** | **ja** | **ja** | **ja** | **Get ränkestart** | **Getränkeende** | **ja** |
| Brühtemperatur | **ja** | **nein** | **nein** | **nein** | **Get ränkestart** | **Getränkeende** | **ja** |
| Getränketemperatur | **nein** | **nein** | **nein** | **ja** | **Get ränkestart** | **Getränkeende** | **nein** |
| Kesseltemperatur | **nein** | **ja** | **ja** | **ja** | **begin Standby** | **ende Standby** | **ja** |

Für die Messwerte bestimmter Komponenten des Getränkebereiters (z.B. der Brühstrom, die Brühtemperatur, die Getränketemperatur und die Kesseltemperatur) ist der einprogrammierte Start der Aufzeichnung ("StartTrigger") und das einprogrammierte Ende der Aufzeichnung ("EndTrigger") angegeben. Ferner ist angegeben, ob die Aufzeichnung des jeweiligen Parameters gerade aktiviert ist ("Logging aktiv"). Darüberhinaus findet sich die Angabe, ob für den jeweiligen Messwert alle Werte in dem Aufzeichnungsintervall (mathematisch) ausgewertet werden sollen und ob die Auswertung basierend auf einem Minimalwert, Maximalwert und/oder Mittelwert eines Soll-Wert-Bereichs für den jeweiligen Parameter erfolgen soll.

### Beispiel 5 - Datenakquisition zum Aufbau einer Wissensdatenbank

Durch interne Untersuchungen in der Qualitätsicherung wird bekannt, das bei Getränkebereitern mit hoher Heizleistung Probleme (z.B. Verschleiß) im Milchsystem mit bestimmten Milchpumpen auftreten können. Um diese Zusammenhänge flächendeckend untersuchen und überwachen zu können, werden bei allen Getränkebereitern mit dieser Milchpumpe entsprechende Diagnosekonfigurationen vorgenommen.

### Bezugszeichenliste

- 1:: Getränkebereiter;
- 2:: Sensor;
- 3:: Datenspeicher;
- 4:: Steuereinheit;
- 5:: elektronische Datenübertragungsschnittstelle;
- 6:: Diagnoseprogramm;
- 7:: Diagnosedaten (z.B. Messwerte);
- 8:: Aktivierung und/oder Aktualisierung des Diagnoseprogramms

## Patentansprüche

1. Getränkebereiter (1) enthaltend
a) mindestens einen Sensor (2) zur Erfassung von Messwerten zu mindestens einer Komponente des Getränkebereiters;
b) einen Datenspeicher (3);
c) eine Steuereinheit (4);
d) eine elektronische Datenübertragungsschnittstelle (5), die zur drahtgebundenen und/oder drahtlosen Datenübertragung geeignet ist;
e) ein Diagnoseprogramm (6), das dem Getränkebereiter über die elektronische Datenübertragungsschnittstelle zur Verfügung steht und/oder auf dem Datenspeicher gespeichert ist,
**dadurch gekennzeichnet, dass** die Steuereinheit dazu konfiguriert ist, das Diagnoseprogramm nach einem über die elektronische Datenübertragungsschnittstelle erhaltenen Befehl zu aktivieren und basierend auf einer im Diagnoseprogramm enthaltenen Information für einen bestimmten Zeitraum über den mindestens einen Sensor Messwerte mindestens einer Komponente des Getränkebereiters zu erfassen und diese an der elektronischen Datenübertragungsschnittstelle bereitzustellen und/oder auf dem Datenspeicher abzuspeichern.

2. Getränkebereiter gemäß Anspruch 1, **dadurch gekennzeichnet, dass** das Diagnoseprogramm dazu programmiert ist, die über den bestimmten Zeitraum erfassten und auf dem Datenträger abgespeicherten Messwerte mathematisch auszuwerten, sodass die Daten zu den ausgewerteten Messwerten eine gegenüber den abgespeicherten Messwerten reduzierte Datenmenge aufweisen, wobei die Daten zu den ausgewerteten Messwerte bevorzugt ausgewählt sind aus der Gruppe bestehend aus Minimalmesswert, Maximalmesswert, (zeitlicher) Mittelwert der Messwerte, Steigung zwischen mindestens zwei Messwerten, Steigung einer linearen Regressionsgeraden der Messwerte, Integral einer von den Messwerten definierten Messkurve, Integral eines Intervalls einer von den Messwerten definierten Messkurve, und Kombinationen hiervon.

3. Getränkebereiter gemäß einem der vorhergehenden Ansprüche, **dadurch gekennzeichnet, dass** die im Diagnoseprogramm enthaltene Information bestimmt, welche Messwerte einer oder mehrerer Komponente(n) des Getränkebereiters über den mindestens einen Sensor, optional auch über weitere Sensoren des Getränkebereites, erfasst werden, wobei die im Diagnoseprogramm enthaltene Information durch einen Befehl geändert werden kann, der über die elektronische Datenübertragungsschnittstelle erhalten wird.

4. Getränkebereiter gemäß einem der vorhergehenden Ansprüche, **dadurch gekennzeichnet, dass** die Steuereinheit dazu konfiguriert ist, an der elektronischen Datenübertragungsschnittstelle Daten zu Messwerten bereitzustellen, die von dem Diagnoseprogramm ausgewertet wurden, und bevorzugt die Daten über die elektronische Datenübertragungsschnittstelle an einen Empfänger zu senden, besonders bevorzugt an die Quelle des Befehls, wobei die Daten zu den ausgewerteten Messwerten optional nach dem Senden an den Empfänger auf dem Getränkebereiter gelöscht werden.

5. Getränkebereiter gemäß einem der vorhergehenden Ansprüche, **dadurch gekennzeichnet, dass** die Steuereinheit dazu konfiguriert ist, nach einem über die elektronische Datenübertragungsschnittstelle erhaltenen Befehl, mindestens einen auf dem Datenspeicher abgespeicherten Soll-Messwert des mindestens einen Sensors an der elektronischen Datenübertragungsschnittstelle bereitzustellen und bevorzugt über die elektronische Datenübertragungsschnittstelle an einen Empfänger zu senden, besonders bevorzugt an die Quelle des Befehls, wobei der mindestens eine Soll-Messwert insbesondere ausgewählt ist aus der Gruppe bestehend aus Soll-Minimalmesswert, Soll-Maximalmesswert, (zeitlicher) Soll-Mittelwert, Soll-Steigung zwischen mindestens zwei Messwerten, Soll-Steigung einer linearen Regressionsgeraden, Soll-Integral einer von Messwerten definierten Messkurve, Soll-Integral eines Intervalls einer von den Messwerten definierten Messkurve, und Kombinationen hiervon.

6. Getränkebereiter gemäß einem der vorhergehenden Ansprüche, **dadurch gekennzeichnet, dass** das Diagnoseprogramm konfigurierbar ist, bevorzugt über die elektronische Datenübertragungsschnittstelle, wobei das Diagnoseprogramm besonders bevorzugt dazu konfiguriert ist, für einen bestimmten Zeitraum, bevorzugt basierend auf einem Auslöser und/oder Ereignis, über mindestens einen weiteren Sensor, optional mehrere weitere Sensoren, Messwerte der Komponente, optional mindestens einer weiteren oder mehrerer weiterer Komponenten, des Getränkebereiters zu erfassen und diese an der elektronischen Datenübertragungsschnittstelle bereitzustellen und/oder auf dem Datenspeicher zu speichern.

7. Getränkebereiter gemäß einem der vorhergehenden Ansprüche, **dadurch gekennzeichnet, dass** elektronische Datenübertragungsschnittstelle drahtgebunden, bevorzugt über LAN und/oder Ethernet, und/oder drahtlos, bevorzugt über WLAN, Bluetooth und/oder Mobilfunk, mit einem Serverspeicher und/oder einem Cloud-Speicher verbunden ist.

8. Verfahren zur Diagnose eine Getränkebereiters, umfassend die Schritte
a) Warten auf einen Befehl zur Diagnose über eine elektronische Datenübertragungsschnittstelle des Getränkebereiters, wobei die elektronische Datenübertragungsschnittstelle zur drahtgebundenen und/oder drahtlosen Datenübertragung geeignet ist;
b) Aktivieren eines Diagnoseprogramms durch eine Steuereinheit des Getränkebereiters nach einem über die elektronische Datenübertragungsschnittestelle erhaltenen Befehl, wobei das Diagnoseprogramm dem Getränkebereiter über die elektronische Datenübertragungsschnittstelle zur Verfügung steht und/oder auf dem Datenspeicher gespeichert ist;
c) Erfassen von Messwerten mindestens einer Komponente des Getränkebereiters über den mindestens einem Sensor des Getränkebereiters für einen bestimmten Zeitraum basierend auf einer im Diagnoseprogramm enthaltenen Information, wobei die Messwerte an der elektronischen Datenübertragungsschnittstelle bereitgestellt werden und/oder auf einem Datenspeicher des Getränkebereiters abgespeichert werden.

9. Verfahren gemäß Anspruch 8, **dadurch gekennzeichnet, dass** das Diagnoseprogramm die über den bestimmten Zeitraum erfassten und auf dem Datenträger abgespeicherten Messwerte mathematisch auswertet, sodass die Daten zu den ausgewerteten Messwerte eine gegenüber den abgespeicherten Messwerten reduzierte Datenmenge aufweisen, wobei die Daten zu den ausgewerteten Messwerte bevorzugt ausgewählt sind aus der Gruppe bestehend aus Minimalmesswert, Maximalmesswert, (zeitlicher) Mittelwert der Messwerte, Steigung zwischen mindestens zwei Messwerten, Steigung einer linearen Regressionsgeraden der Messwerte, Integral einer von den Messwerten definierten Messkurve, Integral eines Intervalls einer von den Messwerten definierten Messkurve, und Kombinationen hiervon.

10. Verfahren einem der Ansprüche 8 oder 9, **dadurch gekennzeichnet, dass** die im Diagnoseprogramm enthaltene Information bestimmt, welche Messwerte einer oder mehrerer Komponente(n) des Getränkebereiters über den mindestens einen Sensor, optional auch über weitere Sensoren des Getränkebereites, erfasst werden, wobei die im Diagnoseprogramm enthaltene Information optional durch einen Befehl geändert wird, der über die elektronische Datenübertragungsschnittstelle erhalten wird .

11. Verfahren gemäß einem der Ansprüche 8 bis 10, **dadurch gekennzeichnet, dass** die Steuereinheit an der elektronischen Datenübertragungsschnittstelle Daten zu Messwerten bereitstellt, die von dem Diagnoseprogramm ausgewertet wurden, wobei die Steuereinheit bevorzugt die Daten über die elektronische Datenübertragungsschnittstelle an einen Empfänger sendet, besonders bevorzugt an die Quelle des Befehls, wobei die Daten zu den ausgewerteten Messwerten optional nach dem Senden an den Empfänger auf dem Getränkebereiter gelöscht werden.

12. Verfahren gemäß einem der Ansprüche 8 bis 11, **dadurch gekennzeichnet, dass** die Steuereinheit, nach einem über die elektronische Datenübertragungsschnittstelle erhaltenen Befehl, mindestens einen auf dem Datenspeicher abgespeicherten Soll-Messwert des mindestens einen Sensors an der elektronischen Datenübertragungsschnittstelle bereitstellt und bevorzugt über die elektronische Datenübertragungsschnittstelle an einen Empfänger sendet, besonders bevorzugt an die Quelle des Befehls, wobei der mindestens eine Soll-Messwert insbesondere ausgewählt ist aus der Gruppe bestehend aus Soll-Minimalmesswert, Soll-Maximalmesswert, (zeitlicher) Soll-Mittelwert, Soll-Steigung zwischen mindestens zwei Messwerten, Soll-Steigung einer linearen Regressionsgeraden, Soll-Integral einer von Messwerten definierten Messkurve, Soll-Integral eines Intervalls einer von den Messwerten definierten Messkurve, und Kombinationen hiervon.

13. Verfahren gemäß einem der Ansprüche 8 bis 12, **dadurch gekennzeichnet, dass** das Diagnoseprogramm konfigurierbar ist, bevorzugt über die elektronische Datenübertragungsschnittstelle, wobei das Diagnoseprogramm besonders bevorzugt dazu konfiguriert ist oder wird, für einen bestimmten Zeitraum, bevorzugt basierend auf einem Auslöser und/oder Ereignis, über mindestens einen weiteren Sensor, optional mehrere weitere Sensoren, Messwerte der Komponente, optional mindestens einer weiteren oder mehrerer weiterer Komponenten, des Getränkebereiters zu erfassen und diese an der elektronischen Datenübertragungsschnittstelle bereitzustellen und/oder auf dem Datenspeicher zu speichern.

14. Verfahren gemäß einem der Ansprüche 8 bis 13, **dadurch gekennzeichnet, dass** elektronische Datenübertragungsschnittstelle drahtgebunden, bevorzugt über LAN und/oder Ethernet, und/oder drahtlos, bevorzugt über WLAN, Bluetooth und/oder Mobilfunk, mit einem Serverspeicher und/oder einem Cloud-Speicher verbunden ist oder wird.

## Claims

1. A beverage-making machine (1) comprising
a) at least one sensor (2) for acquiring measured values for at least one component of the beverage-making machine;
b) a data store (3);
c) a control unit (4);
d) an electronic data communication interface (5) suitable for wired and/or wireless data transmission;
e) a diagnostic program (6) which is available to the beverage-making machine via the electronic data communication interface and/or is stored on the data store,
**characterised in that** the control unit is configured to activate the diagnostic program after an instruction obtained via the electronic data communication interface and, based on information contained in the diagnostic program, to acquire measured values of at least one component of the beverage-making machine for a particular period of time via the at least one sensor and to provide these values to the electronic data communication interface and/or to store them on the data store.

2. A beverage-making machine according to claim 1, **characterised in that** the diagnostic program is programmed to mathematically evaluate the measured values acquired over the particular period of time and stored on the data carrier, such that the data for the evaluated measured values has a reduced amount of data with respect to the stored measured values, wherein the data for the evaluated measured values is preferably selected from the group consisting of minimum measured value, maximum measured value, (temporal) mean value of the measured values, gradient between at least two measured values, gradient of a linear regression line of the measured values, integral of a measurement curve defined by the measured values, integral of an interval of a measurement curve defined by the measured values, and combinations thereof.

3. A beverage-making machine according to any one of the preceding claims, **characterised in that** the information contained in the diagnostic program determines which measured values of one or a plurality of component(s) of the beverage-making machine are acquired via the at least one sensor, optionally also via further sensors, of the beverage-making machine, wherein the information contained in the diagnostic program can be amended by an instruction obtained via the electronic data communication interface.

4. A beverage-making machine according to any one of the preceding claims, **characterised in that** the control unit is configured to provide measured-values data, evaluated by the diagnostic program, to the electronic data communication interface, and preferably to send the data via the electronic data communication interface to a receiver, particularly preferably to the source of the instruction, wherein the data for the evaluated measurement values optionally is deleted from the beverage-making machine after the sending to the receiver.

5. A beverage-making machine according to any one of the preceding claims, **characterised in that** the control unit is configured that, after an instruction obtained via the electronic data communication interface, it provides at least one desired measured value, stored on the data store, of the at least one sensor to the electronic data communication interface and preferably sends it to a receiver via the electronic data communication interface, particularly preferably to the source of the instruction, wherein the at least one desired measured value is in particular selected from the group consisting of desired minimum measured value, desired maximum measured value, desired (temporal) mean value, desired gradient between at least two measured values, desired gradient of a linear regression line, desired integral of a measurement curve defined by measurement values, desired integral of an interval of a measurement curve defined by the measured values and combinations thereof.

6. A beverage-making machine according to any one of the preceding claims, **characterised in that** the diagnostic program can be configured, preferably via the electronic data communication interface, wherein the diagnostic program is particularly preferably configured to acquire for a particular period of time, preferably based on a trigger and/or an event, measured values of the component, optionally at least one further component or a plurality of further components, of the beverage-making machine via at least one further sensor, optionally a plurality of further sensors, and to provide these measured values to the electronic data communication interface and/or to store them on the data store.

7. A beverage-making machine according to any one of the preceding claims, **characterised in that** [the] electronic data communication interface is connected to server storage and/or cloud storage in a wired manner, preferably via LAN and/or Ethernet, and/or wirelessly, preferably via WLAN, Bluetooth and/or mobile communications.

8. A method of diagnosing a beverage-making machine, comprising the steps
a) waiting for a diagnosis instruction via an electronic data communication interface of the beverage-making machine, wherein the electronic data communication interface is suitable for wired and/or wireless data transmission;
b) activation of a diagnostic program by a control unit of the beverage-making machine after an instruction obtained via the electronic data communication interface, wherein the diagnostic program is available to the beverage-making machine via the electronic data communication interface and/or is stored on the data store;
c) acquisition of measured values of at least one component of the beverage-making machine via the at least one sensor of the beverage-making machine for a particular period of time and based on information contained in the diagnostic program, wherein the measured values are provided to the electronic data communication interface and/or are stored on the data store of the beverage-making machine.

9. A method according to claim 8, **characterised in that** the diagnostic program mathematically evaluates the measured values acquired over the particular period of time and stored on the data carrier, such that the data for the evaluated measured values has a reduced amount of data with respect to the stored measured values, wherein the data for the evaluated measured values is preferably selected from the group consisting of minimum measured value, maximum measured value, (temporal) mean value of the measured values, gradient between at least two measured values, gradient of a linear regression line of the measured values, integral of a measurement curve defined by the measured values, integral of an interval of a measurement curve defined by the measured values, and combinations thereof.

10. A method according to any one of claims 8 and 9, **characterised in that** the information contained in the diagnostic program determines which measured values of one or a plurality of component(s) of the beverage-making machine are acquired via the at least one sensor, optionally also via further sensors of the beverage-making machine, wherein the information contained in the diagnostic program is optionally amended by an instruction which is obtained via the electronic data communication interface.

11. A method according to any one of claims 8 to 10, **characterised in that** the control unit provides measured-values data, evaluated by the diagnostic program, to the electronic data communication interface, wherein the control unit preferably sends the data to a receiver via the electronic data communication interface, particularly preferably to the source of the instruction, wherein the data for the evaluated measured values optionally is deleted from the beverage-making machine after the sending to the receiver.

12. A method according to any one of claims 8 to 11, **characterised in that** after an instruction obtained via the electronic data communication interface, the control unit provides at least one desired measured value, stored on the data store, of the at least one sensor to the electronic data communication interface and preferably sends the at least one desired measured value to a receiver via the electronic data communication interface, particularly preferably to the source of the instruction, wherein the at least one desired measured value is in particular selected from the group consisting of desired minimum measured value, desired maximum measured value, desired (temporal) mean value, desired gradient between at least two measured values, desired gradient of a linear regression line, desired integral of a measurement curve defined by measured values, desired integral of an interval of a measurement curve defined by the measured values, and combinations thereof.

13. A method according to any one of claims 8 to 12, **characterised in that** the diagnostic program can be configured, preferably via the electronic data communication interface, wherein the diagnostic program is or is being particularly preferably configured to acquire for a particular period of time, preferably based on a trigger and/or event, measured values of the component, optionally at least one further component or a plurality of further components, of the beverage-making machine via at least one further sensor, optionally a plurality of further sensors, and to provide these measured values to the electronic data communication interface and/or to store them on the data store.

14. A method according to any one of claims 8 to 13, **characterised in that** [the] electronic data communication interface is or is being connected to server storage and/or cloud storage in a wired manner, preferably via LAN and/or Ethernet, and/or wirelessly, preferably via WLAN, Bluetooth and/or mobile communications.

## Revendications

1. Appareil préparateur de boissons (1) contenant
a) au moins un capteur (2) pour le relevé de valeurs de mesure concernant au moins un composant de l'appareil préparateur de boissons ;
b) une mémoire de données (3) ;
c) une unité de commande (4) ;
d) une interface de transmission de données électronique (5) conçue pour la transmission de données filaire et/ou sans fil ;
e) un programme de diagnostic (6) qui est mis à la disposition de l'appareil préparateur de boissons par l'intermédiaire de l'interface de transmission de données électronique et/ou qui est enregistré sur la mémoire de données,
**caractérisé en ce que** l'unité de commande est configurée pour activer le programme de diagnostic selon une instruction obtenue par l'intermédiaire de l'interface de transmission de données électronique et, sur la base d'une information contenue dans le programme de diagnostic, pour relever, pendant une période déterminée, par l'intermédiaire de l'au moins un capteur, des valeurs de mesure d'au moins un composant de l'appareil préparateur de boissons et pour mettre celles-ci à disposition sur l'interface de transmission de données électronique et/ou pour les enregistrer sur la mémoire de données.

2. Appareil préparateur de boissons selon la revendication 1, **caractérisé en ce que** le programme de diagnostic est programmé pour analyser mathématiquement les valeurs de mesure relevées pendant la période déterminée et enregistrées sur le support de données, de façon à ce que les données concernant les valeurs de mesure analysées représentent une quantité de données réduite par rapport aux valeurs de mesure enregistrées, dans lequel les données concernant les valeurs de mesure analysées sont de préférence sélectionnées dans le groupe constitué de : valeur de mesure minimale, valeur de mesure maximale, valeur moyenne (en fonction du temps) des valeurs de mesure, pente entre au moins deux valeurs de mesure, pente d'une droite de régression linéaire des valeurs de mesure, intégrale d'une courbe de mesure définie par les valeurs de mesure, intégrale d'un intervalle d'une courbe de mesure définie par les valeurs de mesure et des combinaisons de celles-ci.

3. Appareil préparateur de boissons selon l'une des revendications précédentes, **caractérisé en ce que** l'information contenue dans le programme de diagnostic détermine quelles valeurs de mesure d'un ou plusieurs composants de l'appareil préparateur de boissons sont relevées par l'intermédiaire de l'au moins un capteur, en option également par l'intermédiaire d'autres capteurs de l'appareil préparateur de boissons, dans lequel l'information contenue dans le programme de diagnostic peut être modifiée par une instruction qui est obtenue par l'intermédiaire de l'interface de transmission de données électronique.

4. Appareil préparateur de boissons selon l'une des revendications précédentes, **caractérisé en ce que** l'unité de commande est configurée pour mettre à la disposition de l'interface de transmission de données électronique des données concernant des valeurs de mesure, qui ont été analysées par le programme de diagnostic et de préférence pour envoyer les données par l'intermédiaire de l'interface de transmission de données électronique à un récepteur, plus particulièrement de préférence à la source de l'instruction, dans lequel les données concernant les valeurs de mesure analysées sont, en option, effacées après l'envoi au récepteur, sur l'appareil préparateur de boissons.

5. Appareil préparateur de boissons selon l'une des revendications précédentes, **caractérisé en ce que** l'unité de commande est configurée pour mettre à la disposition de l'interface de transmission de données électronique, selon une instruction obtenue par l'intermédiaire de l'interface de transmission de données électronique, au moins une valeur de mesure de consigne, enregistrée sur la mémoire de données, de l'au moins un capteur et de préférence pour l'envoyer, par l'intermédiaire de l'interface de transmission de données électronique, à un récepteur, plus particulièrement de préférence à la source de l'instruction, dans lequel l'au moins une valeur de mesure de consigne est plus particulièrement sélectionnée dans le groupe constitué de : valeur de mesure minimale de consigne, valeur de mesure maximale de consigne, valeur moyenne de consigne (en fonction du temps) des valeurs de mesure, pente de consigne entre au moins deux valeurs de mesure, pente de consigne d'une droite de régression linéaire, intégrale de consigne d'une courbe de mesure définie par les valeurs de mesure, intégrale de consigne d'un intervalle d'une courbe de mesure définie par les valeurs de mesure et des combinaisons de celles-ci.

6. Appareil préparateur de boissons selon l'une des revendications précédentes, **caractérisé en ce que** le programme de diagnostic peut être configuré, de préférence par l'intermédiaire de l'interface de transmission de données électronique, dans lequel le programme de diagnostic est plus particulièrement de préférence configuré pour relever, pendant une période déterminée, de préférence sur la base d'un déclencheur et/ou d'un événement, par l'intermédiaire d'au moins un autre capteur, en option de plusieurs autres capteurs, des valeurs de mesure du composant, en option d'au moins un autre ou de plusieurs autres composants, de l'appareil préparateur de boissons et pour les mettre à la disposition de l'interface de transmission de données électronique et/ou pour les enregistrer sur la mémoire de données.

7. Appareil préparateur de boissons selon l'une des revendications précédentes, **caractérisé en ce que** l'interface de transmission de données électronique est reliée de manière filaire, de préférence par LAN et/ou Ethernet, et/ou sans fil, de préférence par WLAN, Bluetooth et/ou téléphonie mobile, avec une mémoire de serveur et/ou une mémoire cloud.

8. Procédé de diagnostic d'un appareil préparateur de boissons, comprenant les étapes suivantes :
a) attente d'une instruction pour le diagnostic par l'intermédiaire d'une interface de transmission de données électronique de l'appareil préparateur de boissons, dans lequel l'interface de transmission de données électronique est conçue pour une transmission de données filaire et/ou sans fil ;
b) activation d'un programme de diagnostic par une unité de commande de l'appareil préparateur de boissons selon une instruction obtenue par l'intermédiaire de l'interface de transmission de données électronique, dans lequel le programme de diagnostic est à la disposition de l'appareil préparateur de boissons par l'intermédiaire de l'interface de transmission de données électronique et/ou est enregistré sur la mémoire de données ;
c) relevé de valeurs de mesure d'au moins un composant de l'appareil préparateur de boissons par l'intermédiaire d'au moins un capteur de l'appareil préparateur de boissons pendant une période déterminée sur la base d'une information contenue dans le programme de diagnostic, dans lequel les valeurs de mesure sont mises à la disposition de l'interface de transmission de données électronique et/ou sont enregistrées sur une mémoire de données de l'appareil préparateur de boissons.

9. Procédé selon la revendication 8, **caractérisé en ce que** le programme de diagnostic analyse mathématiquement les valeurs de mesure relevées pendant la période détermine et enregistrées sur le support de données, de façon à ce que les données concernant les valeurs de mesure analysées représente une quantité de données réduite par rapport aux valeurs de mesure enregistrées, dans lequel les données concernant les valeurs de mesures analysées sont de préférence sélectionnées dans le groupe constitué de : valeur de mesure minimale, valeur de mesure maximale, valeur moyenne (en fonction du temps) des valeurs de mesure, pente entre au moins deux valeurs de mesure, pente d'une droite de régression linéaire des valeurs de mesure, intégrale d'une courbe de mesure définie par les valeurs de mesure, intégrale d'un intervalle d'une courbe de mesure définie par les valeurs de mesure et des combinaisons de celles-ci.

10. Procédé selon l'une des revendications 8 ou 9, **caractérisé en ce que** l'information contenue dans le programme de diagnostic détermine quelles valeurs de mesure d'un ou plusieurs composants de l'appareil préparateur de boissons sont relevées par l'intermédiaire de l'au moins un capteur, en option également par l'intermédiaire d'autres capteurs de l'appareil préparateur de boissons, dans lequel l'information contenue dans le programme de diagnostic est, en option, modifiée par une instruction qui est obtenue par l'intermédiaire de l'interface de transmission de données électronique.

11. Procédé selon l'une des revendications 8 à 10, **caractérisé en ce que** l'unité de commande met à la disposition de l'interface de transmission de données électronique des données concernant des valeurs de mesure, qui ont été analysées par le programme de diagnostic, dans lequel l'unité de commande en voie de préférence les données par l'intermédiaire de l'interface de transmission de données électronique à un récepteur, plus particulièrement de préférence à la source de l'instruction, dans lequel les données concernant les valeurs de mesure analysées sont, en option, effacées après l'envoi au récepteur, sur l'appareil préparateur de boissons.

12. Procédé selon l'une des revendications 8 à 11, **caractérisé en ce que** l'unité de commande met à la disposition de l'interface de transmission de données électronique, selon une instruction obtenue par l'intermédiaire de l'interface de transmission de données électronique, au moins une valeur de mesure de consigne, enregistrée sur la mémoire de données, de l'au moins un capteur et de préférence et de préférence l'envoie, par l'intermédiaire de l'interface de transmission de données électronique, à un récepteur, plus particulièrement de préférence à la source de l'instruction, dans lequel l'au moins une valeur de mesure de consigne est plus particulièrement sélectionnée dans le groupe constitué de : valeur de mesure minimale de consigne, valeur de mesure maximale de consigne, valeur moyenne de consigne (en fonction du temps) des valeurs de mesure, pente de consigne entre au moins deux valeurs de mesure, pente de consigne d'une droite de régression linéaire, intégrale de consigne d'une courbe de mesure définie par les valeurs de mesure, intégrale de consigne d'un intervalle d'une courbe de mesure définie par les valeurs de mesure et des combinaisons de celles-ci.

13. Procédé selon l'une des revendications 8 à 12, **caractérisé en ce que** le programme de diagnostic peut être configuré, de préférence par l'intermédiaire de l'interface de transmission de données électronique, dans lequel le programme de diagnostic est plus particulièrement de préférence configuré pour relever, pendant une période déterminée, de préférence sur la base d'un déclencheur et/ou d'un événement, par l'intermédiaire d'au moins un autre capteur, en option de plusieurs autres capteurs, des valeurs de mesure du composant, en option d'au moins un autre ou de plusieurs autres composants, de l'appareil préparateur de boissons et pour les mettre à la disposition de l'interface de transmission de données électronique et/ou pour les enregistrer sur la mémoire de données.

14. Procédé selon l'une des revendications 8 à 13, **caractérisé en ce que** l'interface de transmission de données électronique est reliée de manière filaire, de préférence par LAN et/ou Ethernet, et/ou sans fil, de préférence par WLAN, Bluetooth et/ou téléphonie mobile, avec une mémoire de serveur et/ou une mémoire cloud.
